# EUROPÄISCHE PATENTSCHRIFT

(11) **EP 1 359 067 B1**
(45) Veröffentlichungstag und Bekanntmachung des Hinweises auf die Patenterteilung: **03.08.2005**
(21) Anmeldenummer: 03008755.5
(22) Anmeldetag: 17.04.2003
(51) Int. Cl.: B60R 22/343, B60R 22/405, B60R 22/46

(54) **Gurtaufroller für einen Fahrzeug-Sicherheitsgurt**
Retractor for a vehicle safety belt
Enrouleur pour le ceinture de sécurité d'un véhicule

(30) Priorität: 26.04.2002 DE 20206667 U
(43) Veröffentlichungstag der Anmeldung: 05.11.2003
(73) Patentinhaber: TRW Automotive Electronics & Components GmbH & Co. KG, 78315 Radolfzell (DE)
(72) Erfinder: Peter, Cornelius, 77815 Bühl (DE)
(74) Vertreter: Sties, Jochen, Dipl.-Ing.

(56) Entgegenhaltungen:
- EP-A- 0 972 684
- DE-A- 10 018 972
- DE-A- 19 513 724
- FR-A- 2 696 693

## Beschreibung

Die Erfindung betrifft einen Gurtaufroller für einen Fahrzeug-Sicherheitsgurt, mit einem Rahmen, einer Gurtspule, die drehbar in dem Rahmen angebracht ist, einem Antriebsmotor, der mit einem Antriebsrad zusammenwirken kann, das mit der Gurtspule gekoppelt ist, einer Blockierklinke und einer Blockierverzahnung, in welche die Blockierklinke eingesteuert werden kann, um die Gurtspule zu blockieren.

Ein solcher Gurtaufroller ist aus der DE 100 18 972 bekannt. Die Blockierklinke ist von einer Feder im Sinne eines Eingriffs in die Blockierverzahnung beaufschlagt. Es ist ein Elektromagnet vorgesehen, der im eingeschalteten Zustand die Blockierklinke außer Eingriff mit der Blockierverzahnung hält.

Die Aufgabe der Erfindung besteht darin, den bekannten Gurtaufroller dahingehend zu verbessern, daß sich ein geringerer Bauaufwand ergibt.

Zu diesem Zweck ist erfindungsgemäß bei einem Gurtaufroller der eingangs genannten Art vorgesehen, daß das Antriebsrad relativ zur Gurtspule begrenzt verdrehbar ist und daß die Blockierklinke in Abhängigkeit von dieser Relativdrehung gesteuert wird. Der erfindungsgemäße Gurtaufroller beruht auf dem Grundgedanken, den ohnehin schon vorhandenen Antriebsmotor für die Gurtspule nun auch zur Steuerung der Blockierklinke zu verwenden. Dies geschieht dadurch, daß der Antriebsmotor so gesteuert wird, daß sich die zur Steuerung der Blockierklinke erforderliche Relativdrehung zwischen dem Antriebsrad und der Gurtspule ergibt. Dies ermöglicht es, auf zusätzliche Bauteile zu verzichten, die bisher zur Betätigung der Blockierklinke erforderlich waren.

Vorzugsweise ist vorgesehen, daß die Blockierverzahnung an einem Blockierrad ausgebildet ist, das fest mit der Gurtspule verbunden ist, und daß zwischen dem Antriebsrad und dem Blockierrad wenigstens eine Rückstellfeder vorgesehen ist, die das Antriebsrad relativ zum Blockierrad in eine Ausgangsstellung beaufschlagt. Dabei wird vorzugsweise die Blockierklinke von einer Blockierfeder permanent im Sinne eines Eingriffs in die Blockierverzahnung beaufschlagt, wobei das Antriebsrad mit einer Steuerverzahnung versehen ist, die durch Vertiefungen in der ansonsten glatten Außenumfangsfläche des Antriebsrades gebildet ist, und wobei die Blockierverzahnung und die Steuerverzahnung so ausgebildet sind, daß in der Ausgangsstellung zwischen Antriebsrad und Blockierrad die Außenumfangsfläche des Antriebsrades verhindert, daß die Blockierklinke in die Blockierverzahnung eingesteuert wird. Die Rückstellfeder kann dabei so dimensioniert sein, daß das Schleppmoment des stromlosen Antriebsmotors größer ist als das Drehmoment, das zum Verdrehen des Antriebsrades relativ zum Blockierrad erforderlich ist. Auf diese Weise wird eine Notlauf-Sperrung erzielt, die die Gurtspule dann in der Gurtband-Abzugsrichtung sperrt, wenn der Antriebsmotor stehenbleibt. Die Rückstellfeder kann auch derart stärker dimensioniert werden, daß es beim langsamen Abzug von Gurtband von der Gurtspule nicht zu einer Relativdrehung zwischen Antriebsrad und Blockierrad kommt, sondern erst beim Überschreiten einer vorbestimmten Drehbeschleunigung der Gurtspule, da in diesem Fall das Rotationsträgheitsmoment des Antriebsmotors zusätzlich als Bremse wirkt. Auf diese Weise kann eine Blockierfunktion verwirklicht werden, die einer herkömmlichen mechanischen, gurtbandsensitiven Blockierung entspricht.

Gemäß einer bevorzugten Ausführungsform der Erfindung ist vorgesehen, daß die mit der Blockierklinke zusammenwirkende Flanke der Blockierverzahnung nicht hinterschnitten ist. Dies ermöglicht der Steuerverzahnung des Antriebsrades, die Blockierklinke bei blockierter Gurtspule aus der Blockierverzahnung auszusteuern, ohne daß zu diesem Zweck die Gurtspule in der Gurtband-Aufwickelrichtung gedreht werden muß; eine solche Drehung würde vom Fahrzeuginsassen als störende, kurzzeitige Erhöhung der Gurtbandkraft empfunden.

Vorzugsweise ist eine Aufwickelfeder vorgesehen, welche die Gurtspule in der Gurtband-Aufwickelrichtung mit einem Drehmoment beaufschlagt, das größer ist als das Schleppmoment des Antriebsmotors, wenn dieser stromlos ist. Auch dies gewährleistet eine Notlauffunktion dahingehend, daß bei der Unterbrechung der elektrischen Versorgung des Antriebsmotors oder beim Ausfall von dessen Steuerung in jedem Fall gewährleistet ist, daß das Gurtband ordnungsgemäß aufgewickelt wird, wenn der Fahrzeuginsasse den Sicherheitsgurt ablegt.

Vorzugsweise ist eine elektronische Steuereinheit vorgesehen, die den Antriebsmotor so steuert, daß beim Abziehen bzw. Aufwickeln des Gurtbandes immer eine vorbestimmte Gurtbandkraft wirkt. Die Steuereinheit erkennt die Drehung der Gurtspule, beispielsweise mittels eines Gurtspulen-Sensors, und steuert den Antriebsmotor und damit die Drehung der Gurtspule so, daß das Gurtband in der gewünschten Weise zur Verfügung steht. Wenn der Fahrzeuginsasse beispielsweise den Sicherheitsgurt anlegt, stellt der Antriebsmotor ein Drehmoment bereit, das dem Drehmoment der Aufwickelfeder entgegengerichtet ist. Auf diese Weise ergibt sich eine vergleichsweise niedrige Gurtbandabzugskraft. Das vom Antriebsmotor bereitgestellte Drehmoment wird dabei vorzugsweise so variiert, daß für den Fahrzeuginsassen eine konstante Gurtband-Abzugskraft spürbar ist, obwohl das von der Aufwickelfeder ausgeübte Drehmoment mit zunehmendem Gurtbandabzug ansteigt. Der Antriebsmotor kann auch beim Aufwickeln des Gurtbandes ein Drehmoment bereitstellen, das dem Drehmoment der Aufwickelfeder entgegenwirkt. Auf diese Weise wird die vergleichsweise hohe Gurtband-Aufwickelkraft der Aufwickelfeder auf ein komfortableres Maß herabgesetzt.

Die Steuereinheit kann einen Signaleingang für die Fahrzeugbeschleunigung aufweisen, wobei die Steuereinheit beim Überschreiten einer vorbestimmten Fahrzeugbeschleunigung den Antriebsmotor so steuert, daß das Antriebsrad relativ zum Blockierrad in eine Blockierstellung gebracht wird, in der die Blockierklinke in die Blockierverzahnung eingreift. Das Signal für die Fahrzeugbeschleunigung kann von bereits vorhandenen Systemen stammen, beispielsweise einem elektronischen Stabilitätsprogramm oder einem Antiblockiersystem, und der Steuereinheit über ein Fahrzeug-Bussystem, beispielsweise einen CAN-Bus, geliefert werden. Auf diese Weise läßt sich mit geringem Aufwand die fahrzeugsensitive Blockierung der Gurtspule verwirklichen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Explosionsansicht einen erfindungsgemäßen Gurtaufroller;
- Figur 2 in einer perspektivischen, schematischen Ansicht den Gurtaufroller von Figur 1, wobei zur besseren Übersichtlichkeit einige Bauteile nicht dargestellt sind;
- Figur 3 in einer perspektivischen, vergrößerten Ansicht den Blockiermechanismus des Gurtaufrollers von Figur 2 im nicht blockierten Zustand;
- Figur 4 den Blockiermechanismus von Figur 3 im blockierten Zustand; und
- Figur 5 ein Diagramm des Verlaufs der Gurtbandabzugskraft, der Federkennlinie der Aufwickelfeder sowie des Drehmoments des Antriebsmotors bei verschiedenen Betriebszuständen.

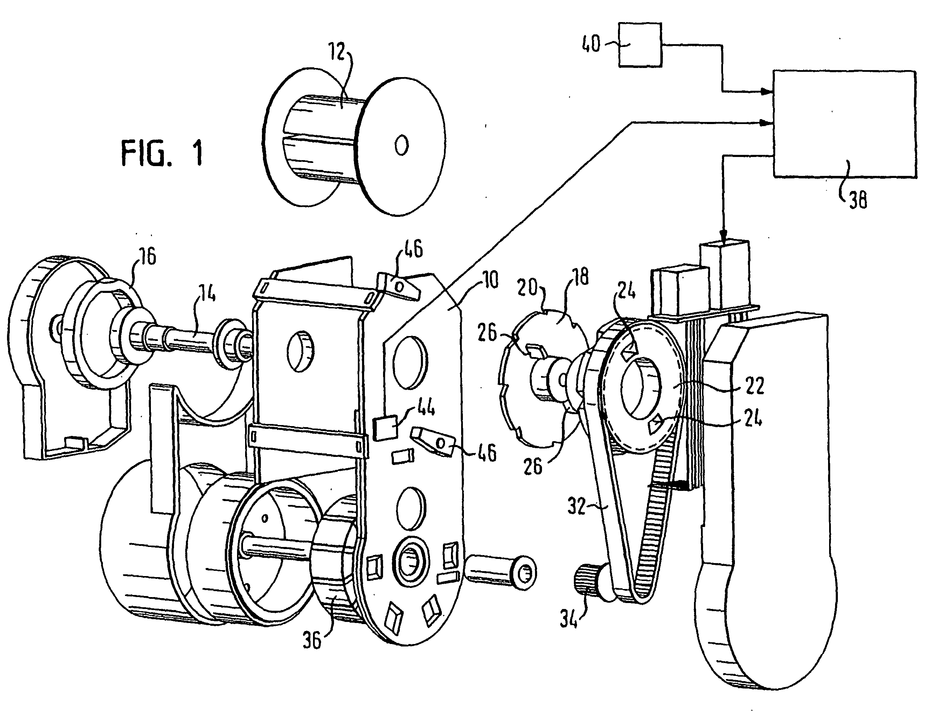

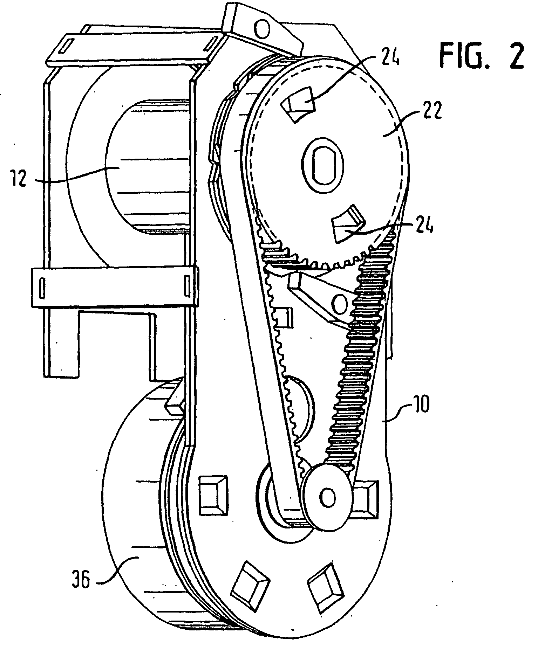

In den Figuren 1 und 2 ist ein Gurtaufroller zu sehen, der einen Rahmen 10 und eine drehbar im Rahmen gelagerte Gurtspule 12 aufweist. Auf der Gurtspule kann ein Fahrzeug-Sicherheitsgurt aufgenommen werden. Im Inneren der Gurtspule 12 ist ein Torsionsstab 14 angeordnet, der an seinem bezüglich Figur 1 linken Ende drehfest mit der Gurtspule 12 verbunden ist. An diesem Ende ist auch eine Aufwickelfeder 16 angeschlossen, welche die Gurtspule 12 in der Gurtband-Aufwickelrichtung beaufschlagt. Mit dem bezüglich Figur 1 rechten Ende des Torsionsstabes 14 ist ein Blockierrad 18 drehfest verbunden. Das Blockierrad 18 weist eine glatte Außenumfangsfläche auf, die in regelmäßigen Abständen von Vertiefungen 20 unterbrochen ist. Die Vertiefungen 20 weisen eine in radialer Richtung ausgerichtete Flanke sowie eine schräg vom tiefsten Punkt der Vertiefung zur Außenumfangsfläche verlaufende Flanke auf, wobei die radial ausgerichtete Flanke diejenige ist, die bei einer Drehung der Gurtspule 12 und damit des Blockierrades 18 in der Gurtband-Abwickelrichtung hinten liegt. Alle Vertiefungen 20 zusammen bilden eine Blockierverzahnung am Blockierrad 18.

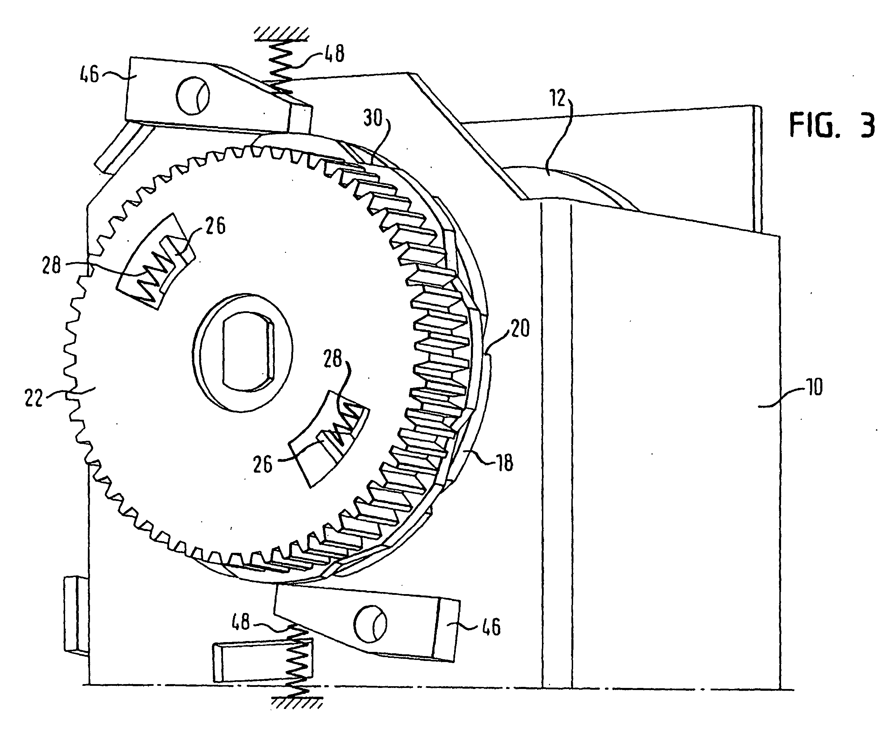

Konzentrisch auf dem Blockierrad 18 ist ein Antriebsrad 22 angeordnet, das mit zwei Aussparungen 24 versehen ist. In jeder Aussparung 24 greift eine Lasche 26 ein, die am Blockierrad 18 ausgebildet sind. Zwischen jeder Lasche 26 und einer Wand der Aussparung 24 ist eine Rückstellfeder 28 (siehe Figur 3) angeordnet, die das Antriebsrad 22 relativ zum Blockierrad 18 in eine in Figur 3 gezeigte Ausgangsstellung beaufschlagen. Das Antriebsrad 22 ist auf seiner Außenumfangsfläche in gleicher Weise wie das Blockierrad 18 mit mehreren Vertiefungen versehen, die hier mit dem Bezugszeichen 30 versehen sind. Im Unterschied zu den Vertiefungen 20 des Blockierrades 18 sind die Vertiefungen 30 des Antriebsrades 22 mit zwei etwa symmetrisch angeordneten, schräg verlaufenden Flanken ausgebildet, so daß eine Steuerverzahnung ausgebildet ist.

Mit dem Antriebsrad 22 ist durch einen Zahnriemen 32 und ein Motorrad 34 ein Antriebsmotor 36 gekoppelt. Bei dem Antriebsmotor handelt es sich vorzugsweise um einen Synchron-Außenläufer-Motor. Der Antriebsmotor wird von einer schematisch dargestellten Steuereinheit 38 angesteuert, die Signale von einem schematisch dargestellten Fahrzeugbeschleunigungssensor 40 und einem schematisch dargestellten Gurtspulen-Sensor 44 empfängt, der die Drehung der Gurtspule erfaßt.

Am Rahmen 10 des Gurtaufrollers sind zwei Blockierklinken 46 angebracht, die einander bezüglich der Drehachse des Blockierrades 18 und des Antriebsrades 22 diametral gegenüberliegen. Die beiden Blockierklinken 46 können in die Blockierverzahnung des Blockierrades 18 eingesteuert werden. Zu diesem Zweck werden sie von jeweils einer Blockierfeder 48 (angedeutet in Figur 3) im Sinne eines Eingriffs in die Blockierverzahnung des Blockierrades 18 beaufschlagt.

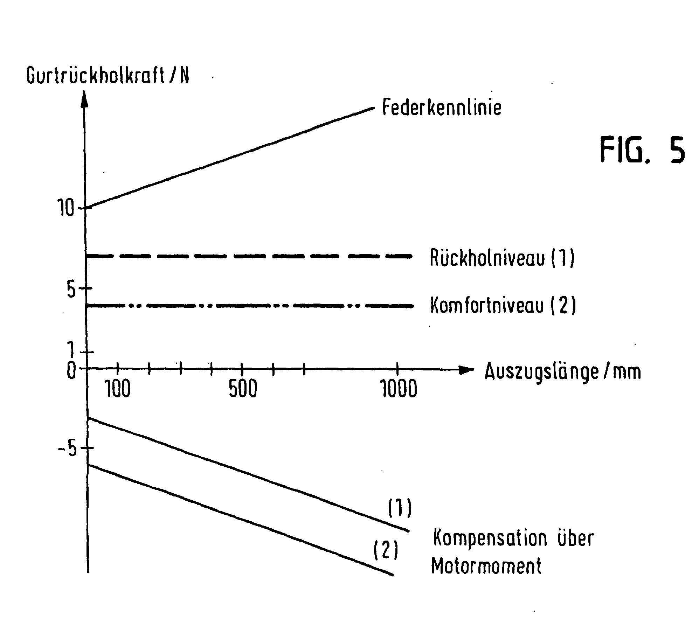

Anhand der Figuren 3 bis 5 wird nachfolgend die Funktionsweise des Gurtaufrollers beschrieben. Ausgegangen wird dabei von einem Gleichgewichtszustand, bei dem die Gurtbandkräfte, das Drehmoment der Aufwickelfeder und das Drehmoment des Antriebsmotors im Gleichgewicht stehen, so daß sich die Gurtspule nicht dreht. Da die Aufwickelfeder 16 so dimensioniert ist, daß sie bei stromlosem Antriebsmotor 36 die Gurtspule in der Aufwickelrichtung drehen kann, ist für diesen Gleichgewichtszustand erforderlich, daß der Antriebsmotor 36 das Drehmoment der Aufwickelfeder größtenteils kompensiert. Der Antriebsmotor versucht also, das Antriebsrad bezüglich Figur 3 entgegen dem Uhrzeigersinn zu drehen. Allein hierdurch befindet sich das Antriebsrad 22 relativ zum Blockierrad 18 in der in Figur 3 gezeigten Ausgangsstellung, die sich dadurch auszeichnet, daß die Vertiefungen 20 des Blockierrades 18 versetzt zu den Vertiefungen 30 des Antriebsrades 22 angeordnet sind. Anders ausgedrückt befinden sich die Vertiefungen eines Rades immer in einem Winkelbereich, in welchem das andere Rad eine glatte Außenumfangsfläche aufweist.

Wenn ausgehend von dem Gleichgewichtszustand von Figur 3 Gurtband von der Gurtspule abgezogen werden soll, sich also die Gurtspule bezüglich Figur 3 entgegen dem Uhrzeigersinn dreht, unterstützt dies der Antriebsmotor, um die am Gurtband verspürte Kraft auf ein komfortableres Niveau zu senken, das unter demjenigen Niveau liegt, das zum Überwinden der Aufwickelfeder erforderlich wäre. Beim Abwickeln des Gurtbandes verbleibt das Antriebsrad 22 relativ zum Blockierrad 18 in der Ausgangsstellung, so daß die Blockierklinken 46 sich abwechselnd auf der Außenfläche des Antriebsrades 22 und der Außenfläche des Blockierrades 18 abstützen; es ist auf diese Weise verhindert, daß sie in die Blockierverzahnung des Blockierrades 18 eingreifen.

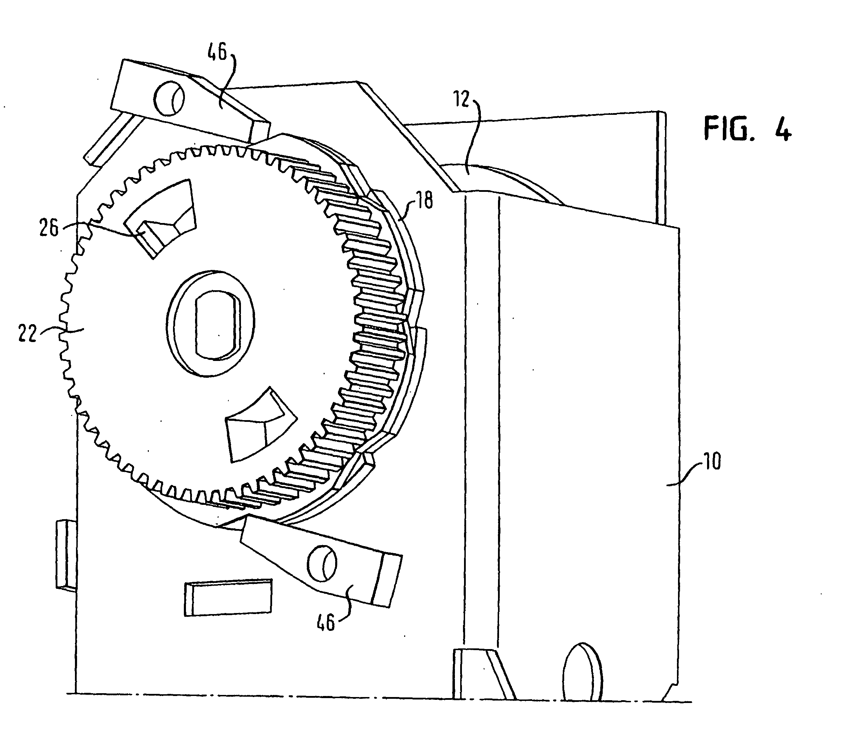

Wenn nun durch einen plötzlichen, starken Zug am Gurtband die Gurtspule sehr schnell in der Gurtband-Abwickelrichtung beaufschlagt wird, "überholt" sie das Antriebsrad, wobei die Rückstellfedern 28 zusammengedrückt werden. Die Vertiefungen 20 des Blockierrades 18 gelangen dann in Überdeckung mit den Vertiefungen 30 des Antriebsrades 22 (siehe Figur 3), und die Blockierklinken 46 können in die nächste Vertiefung 20 des Blockierrades 18 eingreifen; die Gurtspule ist dann blockiert. Dieser Zustand ist in Figur 4 gezeigt.

Wenn ausgehend vom blockierten Zustand die Blockierung wieder gelöst werden soll, wird der Antriebsmotor so angesteuert, daß das Antriebsrad 22 bezüglich Figur 4 entgegen dem Uhrzeigersinn gedreht wird. Dabei laufen die entsprechenden Flanken der Vertiefungen 30 des Antriebsrades 22 auf die Spitzen der Blockierklinken 46 auf und drücken diese radial nach außen, bis sie aus der Blockierverzahnung des Blockierrades 18 ausgesteuert sind. Hierbei ist es nicht erforderlich, die Gurtspule geringfügig in der Gurtband-Aufwickelrichtung zu drehen, da die Flanken der Blockierverzahnung, an denen die Blockierklinken 46 anliegen, radial ausgerichtet sind. Die Blockierung ist wieder aufgehoben, sobald die Blockierklinken 46 auf der glatten Außenumfangsfläche des Antriebsrades 22 aufliegen und die entsprechende Vertiefung 20 des Blockierrades 18 verlassen haben.

Wenn das Gurtband auf die Gurtspule aufgewickelt werden soll, wird das Haltedrehmoment des Antriebsmotors 36 verringert, so daß die Gurtspule 12 unter der Wirkung der Aufwickelfeder 16 sich in der Gurtband-Aufwickelrichtung dreht.

Wenn das Gurtband auf die Gurtspule 12 aufgewickelt werden soll, ist es lediglich erforderlich, das Haltedrehmoment des Antriebsmotors 36 zu verringern, so daß die dann überwiegende Kraft der Aufwickelfeder dafür sorgt, daß sich die Gurtspule bezüglich den Figuren 3 und 4 im Uhrzeigersinn dreht.

Falls es zu einem Defekt am Motor oder an der Motorsteuerung kommt und der Motor keinerlei Antriebsdrehmoment bereitstellt, gewährleistet die Aufwickelfeder 16, daß das Gurtband zuverlässig auf der Gurtspule 12 aufgewickelt wird. Auch ist eine Notfall-Blockierung der Gurtspule gewährleistet. Wenn Gurtband vom Gurtaufroller abgezogen wird, wirkt als Widerstandsmoment das Schleppmoment des Antriebsmotors 36 zuzüglich eines trägheitsbedingten Drehmomentes, wenn die Gurtspule eine Drehbeschleunigung erfährt. Dieses Widerstandsmoment ist ausreichend hoch, um die Vorspannung der Rückstellfedern 28 zu überwinden, wodurch das Antriebsrad 22 relativ zum Blockierrad 18 in die in Figur 4 gezeigte Blockierstellung gelangt. Dann werden die Blockierklinken 46 in die nächste Vertiefung 20 des Blockierrades 18 eingreifen und die Gurtspule blockieren.

Mittels der Steuereinheit 38 lassen sich eine Vielzahl von Komfortfunktionen im Normalbetrieb des Gurtaufrollers verwirklichen. Beispielsweise läßt sich gewährleisten, daß die Gurtband-Aufwickelkraft beim Anlegen des Gurtes niedriger ist als beim Ablegen oder sich auch bei der Fahrt in Abhängigkeit von der Fahrweise ändert. Weiterhin kann gewährleistet werden, daß sich die Gurtband-Aufwickelkraft unabhängig von der Länge des bereits aufgewickelten Gurtbandes nicht ändert.

Abweichend von der gezeigten Ausführungsform ist es auch möglich, die beiden Sperrklinken nicht einander diametral gegenüberliegend, sondern gegenüber der diametralen Anordnung um einen Winkel versetzt anzuordnen, der der Hälfte des Winkelabstandes zwischen zwei Vertiefungen entspricht. Auf diese Weise läßt sich die erforderliche Drehung des Gurtaufrollers bis zu einer Blockierung verringern. Es ist grundsätzlich auch möglich, lediglich eine einzige Blockierklinke zu verwenden.

## Patentansprüche

1. Gurtaufroller für einen Fahrzeug-Sicherheitsgurt, mit einem Rahmen (10), einer Gurtspule (12), die drehbar in dem Rahmen (10) angebracht ist, einem Antriebsmotor (36), der mit einem Antriebsrad (22) zusammenwirkt, das mit der Gurtspule (12) gekoppelt ist, einer Blockierklinke (46) und einer Blockierverzahnung (20), in welche die Blockierklinke (46) eingesteuert werden kann, um die Gurtspule (12) zu blockieren, **dadurch gekennzeichnet, daß** das Antriebsrad (22) relativ zur Gurtspule begrenzt verdrehbar ist und daß die Blockierklinke (46) in Abhängigkeit von dieser Relativdrehung gesteuert wird.

2. Gurtaufroller nach Anspruch 1, **dadurch gekennzeichnet, daß** die Blockierverzahnung (20) an einem Blockierrad (18) ausgebildet ist, das fest mit der Gurtspule (12) verbunden ist, und daß zwischen dem Antriebsrad (22) und dem Blockierrad (18) mindestens eine Rückstellfeder (28) vorgesehen ist, die das Antriebsrad relativ zum Blockierrad in eine Ausgangsstellung beaufschlagt.

3. Gurtaufroller nach Anspruch 2, **dadurch gekennzeichnet, daß** das Blockierrad (18) mit der Gurtspule (12) durch einen Torsionsstab (14) verbunden ist.

4. Gurtaufroller nach einem der vorhergehenden Ansprüche, **dadurch gekennzeichnet, daß** die Blockierklinke (46) von einer Blockierfeder (48) permanent im Sinne eines Eingriffs in die Blockierverzahnung (20) beaufschlagt wird, daß das Antriebsrad (22) mit einer Steuerverzahnung (30) versehen ist, die durch Vertiefungen (30) in der ansonsten glatten Außenumfangsfläche des Antriebsrades (22) gebildet ist, und daß die Blockierverzahnung (20) und die Steuerverzahnung (30) so ausgebildet sind, daß in der Ausgangsstellung zwischen Antriebsrad (22) und Blockierrad (18) die Außenumfangsfläche des Antriebsrades (22) verhindert, daß die Blockierklinke (46) in die Blockierverzahnung (20) eingesteuert wird.

5. Gurtaufroller nach Anspruch 3, **dadurch gekennzeichnet, daß** das Blockierrad (18) eine Außenumfangsfläche aufweist, die zwischen den die Blockierverzahnung bildenden Vertiefungen (20) glatt ist, und daß sich die Blockierklinke (46) an der glatten Außenumfangsfläche abstützen kann.

6. Gurtaufroller nach einem der vorhergehenden Ansprüche, **dadurch gekennzeichnet, daß** die Blockierklinke (46) schwenkbar am Rahmen (10) angebracht ist.

7. Gurtaufroller nach einem der vorhergehenden Ansprüche, **dadurch gekennzeichnet, daß** die mit der Blockierklinke (46) zusammenwirkende Flanke der Blockierverzahnung (20) nicht hinterschnitten ist.

8. Gurtaufroller nach einem der vorhergehenden Ansprüche, **dadurch gekennzeichnet, daß** die Rückstellfeder (28) in Abhängigkeit vom Schleppmoment des Antriebsmotors (36), wenn dieser stromlos ist, und vom Rotations-Trägheitsmoment des Antriebsmotors (36) so dimensioniert ist, daß eine Relativdrehung zwischen dem Antriebsrad (22) und dem Blockierrad (18) erst dann auftritt, wenn die Drehbeschleunigung der Gurtspule (12) in der Gurtband-Abzugsrichtung einen vorbestimmten Grenzwert überschreitet.

9. Gurtaufroller nach einem der vorhergehenden Ansprüche, **dadurch gekennzeichnet, daß** die Rückstellfeder (28) in Abhängigkeit vom Schleppmoment des Antriebsmotors (36), wenn dieser stromlos ist, so dimensioniert ist, daß eine Relativdrehung zwischen dem Antriebsrad (22) und dem Blockierrad (18) dann auftritt, wenn die Gurtspule (12) in der Gurtband-Abzugsrichtung gedreht wird.

10. Gurtaufroller nach einem der vorhergehenden Ansprüche, **dadurch gekennzeichnet, daß** eine Aufwickelfeder (16) vorgesehen ist, welche die Gurtspule (12) in der Gurtband-Aufwickelrichtung mit einem Drehmoment beaufschlagt, das größer ist als das Schleppmoment des Antriebsmotors (36), wenn dieser stromlos ist.

11. Gurtaufroller nach einem der vorhergehenden Ansprüche, **dadurch gekennzeichnet, daß** eine elektronische Steuereinheit (38) vorgesehen ist, die den Antriebsmotor (36) so steuert, daß beim Abziehen bzw. Aufwickeln des Gurtbandes immer eine vorbestimmte Gurtbandkraft wirkt.

12. Gurtaufroller nach einem der vorhergehenden Ansprüche, **dadurch gekennzeichnet, daß** die Steuereinheit ein Signal von einem Fahrzeugbeschleunigungssensor (40) empfangen kann und beim Überschreiten einer vorbestimmten Fahrzeugbeschleunigung den Antriebsmotor (36) so steuert, daß das Antriebsrad (22) relativ zum Blockierrad (18) in eine Blockierstellung gebracht wird, in der die Blockierklinke (46) in die Blockierverzahnung (20) eingreift.

13. Gurtaufroller nach einem der vorhergehenden Ansprüche, **dadurch gekennzeichnet, daß** die Steuereinheit ein Signal von einem Gurtspulen-Sensor (44) empfangen kann, von welchem ausgehend die Drehbeschleunigung der Gurtspule (12) bestimmt wird, und daß die Steuereinheit (38) beim Überschreiten einer vorbestimmten Drehbeschleunigung der Gurtspule (12) den Antriebsmotor (36) so steuert, daß das Antriebsrad (22) relativ zum Blockierrad (18) in eine Blockierstellung gebracht wird, in der die Blockierklinke (46) in die Blockierverzahnung (20) eingreift.

14. Gurtaufroller nach Anspruch 13, **dadurch gekennzeichnet, daß** der Gurtspulen-Sensor (44) ein Hall-Sensor ist.

## Claims

1. A belt retractor for a vehicle safety belt, comprising a frame (10), a belt spool (12) which is rotatably mounted in the frame (10), a drive motor (36) cooperating with a drive wheel (22) which is coupled with the belt spool (12), a locking catch (46) and locking teeth (20) which the locking catch (46) can be caused to engage in order to lock the belt spool (12), **characterized in that** the drive wheel (22) is rotatable relative to the belt spool to a limited extent and that the locking catch (46) is controlled as a function of this relative rotation.

2. The belt retractor according to claim 1, **characterized in that** the locking teeth (20) are constructed on a locking wheel (18) which is securely connected with the belt spool (12), and that between the drive wheel (22) and the locking wheel (18) at least one restoring spring (28) is provided, which biases the drive wheel relative to the locking wheel into an initial position.

3. The belt retractor according to claim 2, **characterized in that** the locking wheel (18) is connected with the belt spool (12) by a torsion rod (14).

4. The belt retractor according to any of the preceding claims, **characterized in that** the locking catch (46) is permanently acted upon by a locking spring (48) in the sense of an engagement into the locking teeth (20), that the drive wheel (22) is provided with control teeth (30) which are formed by depressions (30) in the otherwise smooth outer peripheral surface of the drive wheel (22), and that the locking teeth (20) and the control teeth (30) are constructed such that in the initial position between the drive wheel (22) and the locking wheel (18) the outer peripheral surface of the drive wheel (22) prevents the locking catch (46) from being caused to engage into the locking teeth (20).

5. The belt retractor according to claim 3, **characterized in that** the locking wheel (18) has an outer peripheral surface which is smooth between the depressions (20) forming the locking teeth, and that the locking catch (46) can rest against the smooth outer peripheral surface.

6. The belt retractor according to any of the preceding claims, **characterized in that** the locking catch (46) is pivotally mounted on the frame (10).

7. The belt retractor according to any of the preceding claims, **characterized in that** the side of the locking teeth (20) cooperating with the locking catch (46) is not undercut.

8. The belt retractor according to any of the preceding claims, **characterized in that** the restoring spring (28), as a function of the drag moment of the drive motor (36) when the latter is currentless, and of the rotational moment of inertia of the drive motor (36), is dimensioned such that a relative rotation between the drive wheel (22) and the locking wheel (18) does not occur until the angular acceleration of the belt spool (12) in the belt webbing withdrawal direction exceeds a predetermined limiting value.

9. The belt retractor according to any of the preceding claims, **characterized in that** the restoring spring (28), as a function of the drag moment of the drive motor (36) when the latter is currentless, is dimensioned such that a relative rotation between the drive wheel (22) and the locking wheel (18) occurs when the belt spool (12) is turned in the belt webbing withdrawal direction.

10. The belt retractor according to any of the preceding claims, **characterized in that** a wind-up spring (16) is provided, which acts upon the belt spool (12) in the belt webbing wind-up direction with a torque which is greater than the drag moment of the drive motor (36) when the latter is currentless.

11. The belt retractor according to any of the preceding claims, **characterized in that** an electronic control unit (38) is provided, which controls the drive motor (36) such that on withdrawal or winding-up of the belt webbing, a predetermined belt webbing force is always active.

12. The belt retractor according to any of the preceding claims, **characterized in that** the control unit can receive a signal from a vehicle acceleration sensor (40) and, when a predetermined vehicle acceleration is exceeded, controls the drive motor (36) such that the drive wheel (22) is brought into a locking position relative to the locking wheel (18) in which the locking catch (46) engages into the locking teeth (20).

13. The belt retractor according to any of the preceding claims, **characterized in that** the control unit can receive a signal from a belt spool sensor (44), proceeding from which the angular acceleration of the belt spool (12) is determined, and that when a predetermined angular acceleration of the belt spool (12) is exceeded, the control unit (38) controls the drive motor (36) such that the drive wheel (22) is brought into a locking position relative to the locking wheel (18) in which the locking catch (46) engages into the locking teeth (20).

14. The belt retractor according to claim 13, **characterized in that** the belt spool sensor (44) is a Hall sensor.

## Revendications

1. Enrouleur de ceinture pour une ceinture de sécurité de véhicule, comportant un cadre (10), une bobine de ceinture (12) qui est montée rotative dans le cadre (10), un moteur d'entraînement (36) qui coopère avec une roue d'entraînement (22) qui est accouplée à la bobine de ceinture (12), un cliquet de blocage (46) et une denture de blocage (20) dans laquelle le cliquet de blocage (46) peut s'engager pour bloquer la bobine de ceinture (12), **caractérisé en ce que** la roue d'entraînement (22) est rotative de manière limitée par rapport à la bobine de ceinture et **en ce que** le cliquet de blocage (46) est commandé en fonction de cette rotation relative.

2. Enrouleur de ceinture selon la revendication 1, **caractérisé en ce que** la denture de blocage (20) est réalisée sur une roue de blocage (18) qui est reliée de manière solidaire à la bobine de ceinture (12), et **en ce qu'**entre la roue d'entraînement (22) et la roue de blocage (18) est prévu au moins un ressort de rappel (28) qui sollicite la roue d'entraînement dans une position initiale par rapport à la roue de blocage.

3. Enrouleur de ceinture selon la revendication 2, **caractérisé en ce que** la roue de blocage (18) est reliée à la bobine de ceinture (12) par une barre de torsion (14).

4. Enrouleur de ceinture selon l'une des revendications précédentes, **caractérisé en ce que** le cliquet de blocage (46) est sollicité en permanence par un ressort de blocage (48), dans l'esprit d'un engagement dans la denture de blocage (20), **en ce que** la roue d'entraînement (22) est pourvue d'une denture de commande (30) qui est formée par des creux (30) dans la surface périphérique extérieure, par ailleurs lisse, de la roue d'entraînement (22), et **en ce que** la denture de blocage (20) et la denture de commande (30) sont réalisées de telle sorte que dans la position initiale entre la roue d'entraînement (22) et la roue de blocage (18), la surface périphérique extérieure de la roue d'entraînement (22) empêche que le cliquet de blocage (46) s'engage dans la denture de blocage (20).

5. Enrouleur de ceinture selon la revendication 3, **caractérisé en ce que** la roue de blocage (18) présente une surface périphérique extérieure qui est lisse entre les creux (20) formant la denture de blocage, et **en ce que** le cliquet de blocage (46) peut prendre appui sur la surface périphérique extérieure lisse.

6. Enrouleur de ceinture selon l'une des revendications précédentes, **caractérisé en ce que** le cliquet de blocage (46) est monté à pivotement sur le cadre (10).

7. Enrouleur de ceinture selon l'une des revendications précédentes, **caractérisé en ce que** le flanc de la denture de blocage (20), coopérant avec le cliquet de blocage (46), n'est pas contre-dépouillé.

8. Enrouleur de ceinture selon l'une des revendications précédentes, **caractérisé en ce que** le ressort de rappel (28) est dimensionné en fonction du couple de glissement du moteur d'entraînement (36), lorsque celui-ci est sans courant, et en fonction du couple d'inertie de rotation du moteur d'entraînement (36), de telle sorte qu'une rotation relative entre la roue d'entraînement (22) et la roue de blocage (18) ne se produit que lorsque l'accélération de la rotation de la bobine de ceinture (12) dans le sens de déroulement de la sangle de ceinture dépasse une valeur seuil prédéterminée.

9. Enrouleur de ceinture selon l'une des revendications précédentes, **caractérisé en ce que** le ressort de rappel (28) est dimensionné en fonction du couple de glissement du moteur d'entraînement (36) lorsque celui-ci est sans courant, de telle sorte qu'une rotation relative entre la roue d'entraînement (22) et la roue de blocage (18) se produit lorsque la bobine de ceinture (12) tourne dans le sens de la sangle de ceinture.

10. Enrouleur de ceinture selon l'une des revendications précédentes, **caractérisé en ce qu'**il est prévu un ressort d'enroulement (16) qui sollicite la bobine de ceinture (12) dans le sens d'enroulement de la sangle avec un couple de rotation qui est supérieur au couple de glissement du moteur d'entraînement (36) lorsque celui-ci est sans courant.

11. Enrouleur de ceinture selon l'une des revendications précédentes, **caractérisé en ce qu'**il est prévu une unité de commande (38) électronique qui commande le moteur d'entraînement (36) de telle sorte qu'une force de sangle de ceinture prédéterminée agit toujours lorsque la sangle de ceinture est déroulée ou enroulée.

12. Enrouleur de ceinture selon l'une des revendications précédentes, **caractérisé en ce que** l'unité de commande peut recevoir un signal depuis un capteur d'accélération de véhicule (40) et commander le moteur d'entraînement (36) lors du dépassement d'une accélération de véhicule prédéterminée, de telle sorte que la roue d'entraînement (22) est amenée dans une position de blocage par rapport à la roue de blocage (18), dans laquelle le cliquet de blocage (46) s'engage dans la denture de blocage (20).

13. Enrouleur de ceinture selon l'une des revendications précédentes, **caractérisé en ce que** l'unité de commande peut recevoir un signal depuis un capteur de bobine de ceinture (44) depuis lequel est déterminée l'accélération de rotation de la bobine de ceinture (12), et **en ce que** lors du dépassement d'une accélération de rotation prédéterminée de la bobine de ceinture (12), l'unité de commande (38) commande le moteur d'entraînement (36) de telle sorte que la roue d'entraînement (22) est amenée dans une position de blocage par rapport à la roue de blocage (18), dans laquelle le cliquet de blocage (46) s'engage dans la denture de blocage (20).

14. Enrouleur de ceinture selon la revendication 13, **caractérisé en ce que** le capteur de bobine de ceinture (44) est un capteur de Hall.
